## Europäisches Patentamt
## European Patent Office
## Office européen des brevets

(19)

(11) Veröffentlichungsnummer: **0 033 107**
**B1**

(12)
# EUROPÄISCHE PATENTSCHRIFT

(45) Veröffentlichungstag der Patentschrift:
**09.02.83**

(51) Int. Cl.³: **G 03 B 21/11**

(21) Anmeldenummer: **81100333.4**

(22) Anmeldetag: **17.01.81**

(54) Wechselobjektiv-Einrichtung in einem Mikrofilm-Lesegerät.

(30) Priorität: **26.01.80 DE 3002844**

(43) Veröffentlichungstag der Anmeldung:
**05.08.81 Patentblatt 81/31**

(45) Bekanntmachung des Hinweises auf die Patenterteilung:
**09.02.83 Patentblatt 83/6**

(84) Benannte Vertragsstaaten:
**BE CH FR GB IT LI NL**

(56) Entgegenhaltungen:
**FR-A-2 359 436**
**GB-A-2 010 526**
**US-A-3 907 418**

(73) Patentinhaber: **AGFA-GEVAERT Aktiengesellschaft,
D-5090 Leverkusen 1 (DE)**

(72) Erfinder: **Dietrich, Karl-Heinz, Bozener Strasse 7,
D-8000 München 90 (DE)**
Erfinder: **Gruber, Josef, Sommerstrasse 43,
D-8000 München 90 (DE)**
Erfinder: **Rauffer, Walter, Obere Seeleite 10,
D-8031 Steinebach/Wörthsee (DE)**
Erfinder: **Nassl, Peter, Zugspitzstrasse 13,
D-8035 Gauting (DE)**

## Wechselobjektiv-Einrichtung in einem Mikrofilm-Lesegerät

Die Erfindung betrifft eine Wechselobjektiv-Einrichtung in einem Mikrofilm-Lesegerät nach dem Gattungsbegriff des Hauptanspruches.

Eine solche Einrichtung ist z. B. in der DE-OS 2 750 458 gezeigt. Zum Wechsel des Objektives muß hierbei ein Einstellring in eine bestimmte Position verschwenkt werden, bis das Objektiv nach oben aus dem Objektivtubus herausgezogen werden kann. Da jedoch bei den üblichen Mikrofilm-Lesegeräten knapp oberhalb des Objektivs in aller Regel ein Umlenkspiegel angeordnet ist, ist der Raum oberhalb des Objektivtubus relativ schwer zugänglich, so daß zusätzliche Maßnahmen zweckmäßig sind, um einen bequemen Objektivwechsel zu ermöglichen. So wird beispielsweise in der DE-OS 2 808 443 vorgeschlagen, die Haube des Lesegerätes nach hinten abschwenkbar auszugestalten, wobei bei abgeschwenkter Haube der Raum oberhalb des Objektivtubus frei zgänglich wird. Eine andere Möglichkeit, die Zugänglichkeit des Objektivtubus zu verbessern, wird in der DE-OS 2 632 934 beschrieben, wobei der Objektivtubus im Lesegerät an einem Schieber befestigt ist, der zum Objektivwechsel aus dem Gerät herausziehbar ist.

Die bisher vorgeschlagenen Maßnahmen zum erleichterten Objektivwechsel befriedigen nicht voll, da sie entweder zu aufwendig oder zu umständlich erscheinen.

Es ist daher die Aufgabe der Erfindung, eine Wechselobjektiv-Einrichtung in einem Mikrofilm-Lesegerät zu schaffen, die auf einfache Weise einen schnellen Objektivwechsel erlaubt.

Zur Lösung dieser Aufgabe sind erfindungsgemäß die im Kennzeichen des Hauptanspruches angegebenen Maßnahmen vorgesehen. Hierdurch ist es beim Objektivwechsel nicht mehr erforderlich, zum oberen oder unteren, nur in umständlicher Weise zugänglichen oder durch zusätzliche technische Maßnahmen wahlweise zugänglich machbaren Stirnbereich des zyinderförmigen Objektivträgers vorzudringen. Vielmehr wird das Objektiv auf einfache Weise durch die Öffnung in der seitlichen Mantelfläche des Objektivträgers ausgetauscht.

Zweckmäßigerweise weist der Objektivträger einen dem Mikrofilm zugewandten geschlossenen oder zumindest um mehr als 180° geschlossenen Bereich auf, in dem der in Funktionsposition befindliche Objektivtubus geführt ist, und es schließt sich an diesen Bereich der geöffnete Bereich an, der sich über mindestens 180° des Umfangs des zylinderförmigen Objektivträgers erstreckt. Der Objektivtubus wird somit durch die Öffnung ins Innere des Objektivträgers eingeführt und anschließend in Richtung Mikrofilm verschoben, so daß der geschlossene Bereich des Objektivträgers den in Funktionsposition befindlichen Objektivtubus umfaßt und führt.

Insbesondere dann, wenn die Verwendung eines Drehprismas vorgesehen ist, mit dem die Winkelstellung des projizierten Bildes variiert werden kann, ist in weiterer Ausgestaltung der Erfindung vorgesehen, daß sich an den geöffneten Bereich des Objektivträgers an der dem Mikrofilm abgewandten Seite ein weiterer geschlossener oder zumindest um mehr als 180° geschlossener Bereich anschließt, in dem das Drehprisma drehbar gelagert ist. Das Drehprisma kann vorteilhafterweise im Objektivträger in Richtung der optischen Achse verschieblich gelagert sein und unter der Wirkung einer in Richtung Mikrofilm wirkenden Kraft, z. B. Schwerkraft oder Federkraft, stehen, so daß das Drehprisma auf dem in Funktionsposition befindlichen Objektivtubus aufliegt, wodurch unabhängig von der Baulänge des verwendeten Objektives immer der korrekte Abstand des Drehprismas vom Objektivtubus gewährleistet ist. Drehprisma und Objektivtubus sind somit in einfachster Weise in einem gemeinsamen zylinderförmigen Objektivträger gelagert.

Gemäß einem weiteren Erfindungsmerkaml ist vorgesehen, daß der Objektivtubus unter der Wirkung einer in Richtung Mikrofilm wirkenden Kraft steht, beispielsweise einer Federkraft oder, einfacher, der Schwerkraft, und an einen an dem dem Mikrofilm zugewandten Ende des Objektivtubus aufgeschraubten Stellring anschlägt, so daß durch Verdrehen des Stellrings der Objektivträger in Richtung der optischen Achse zwecks Fokussierung verschiebbar ist.

Vorzugsweise ist der Objektivtubus im Objektivträger verdrehsicher gelagert, so daß im Randbereich des Bildfeldes des Objektives möglicherweise vorhandene Objektivfehler bezüglich ihrer Winkellage so ausgerichtet sein können, daß sie stets außerhalb des effektiv genutzten, rechteckigen Bildbereiches liegen. Besonders einfach kann die Verdrehsicherung dadurch erreicht werden, daß zwei Seiten der Öffnung des Objektivträgers parallel zur optischen Achse ausgebildet sind, und daß am Objektivtubus achsparallele Stützflächen ausgebildet sind, die mit den Seiten der Öffnung zusammenwirken und hierdurch ein Verdrehen des Objektivtubus im Objektivträger verhindern.

Gemäß weiteren Erfindungsmerkmalen ist im Objektivtubus eine Handhabe zum erleichterten Objektivwechsel ausgebildet, die als ein sich im wesentlichen radial vom Objektivtubus erstreckender Griff bei in Betriebsposition befindlichem Objektiv durch die Öffnung im Objektivträger herausragt.

Im folgenden wird ein Ausführungsbeispiel der Erfindung anhand der Zeichnung näher beschrieben.

In der Zeichnung zeigt

Fig. 1 eine perspektivische Ansicht eines Mikrofilm-Lesegerätes mit der erfindungsgemäßen Wechselobjektiv-Einrichtung,

Fig. 2 eine perspektivische Ansicht der Wechselobjektiv-Einrichtung gemäß Fig. 1,

Fig. 3 einen Schnitt durch die Wechselobjektiv-Einrichtung gemäß Fig. 2 entlang der optischen Achse, ohne Objektiv und Drehprisma und

Fig. 4 einen weiteren Schnitt durch die Wechselobjektiv-Einrichtung gemäß Fig. 2 in einer Ebene senkrecht zur Schnittebene gemäß Fig. 3, mit eingesetztem Objektiv und eingesetztem Drehprisma.

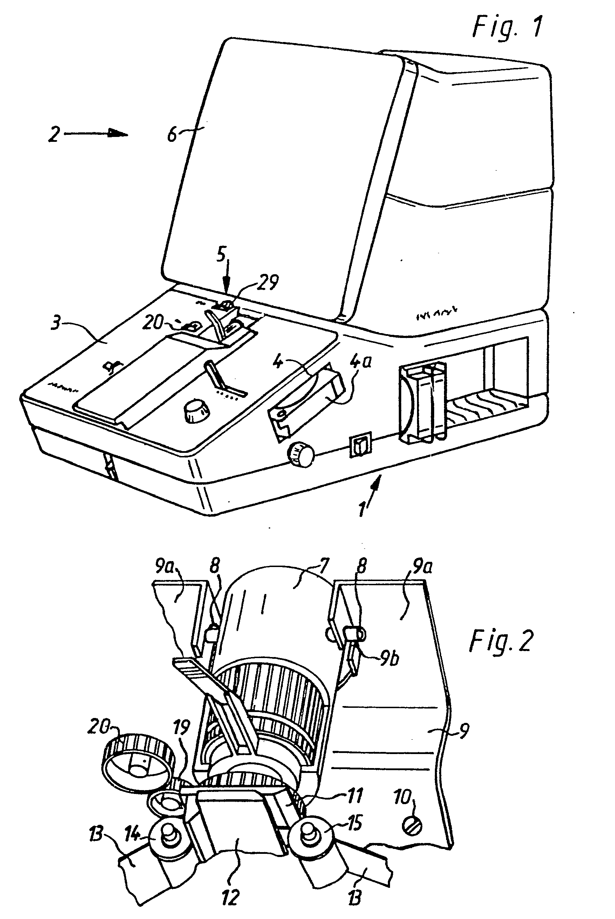

Das Mikrofilm-Lesegerät gemäß Fig. 1 umfaßt ein Geräte-Unterteil 1 und ein Geräte-Oberteil 2, wobei das Geräte-Unterteil Beleuchtungsmittel für das zu projizierende Mikrobild sowie Führungs- und Transportmittel für den Mikrobildträger, im Falle des Ausführungsbeispiels Mikrorollfilm, beinhaltet. In einen Kassettenschacht 4 ist eine Mikrofilm-Kassette 4a eingeschoben. Der in der Mikrofilm-Kassette befindliche Mikrofilm kann an der Objektiveinrichtung 5 vorbeigeführt werden, deren optische Achse gegenüber der Vertikalen geneigt ist und die teilweise aus der dem Benutzer zugewandten, ebenfalls geneigten Geräte-Frontseite 3 herausragt. An der dem Benutzer zugewandten Stirnseite des haubenartigen Geräte-Oberteils 2 ist ein Durchlicht-Projektionsschirm 6 angebracht, auf den die über die Objektiveinrichtung 5 abgebildeten Mikrobilder unter Zwischenschaltung ggf. mehrerer Umlenkspiegel projiziert werde.

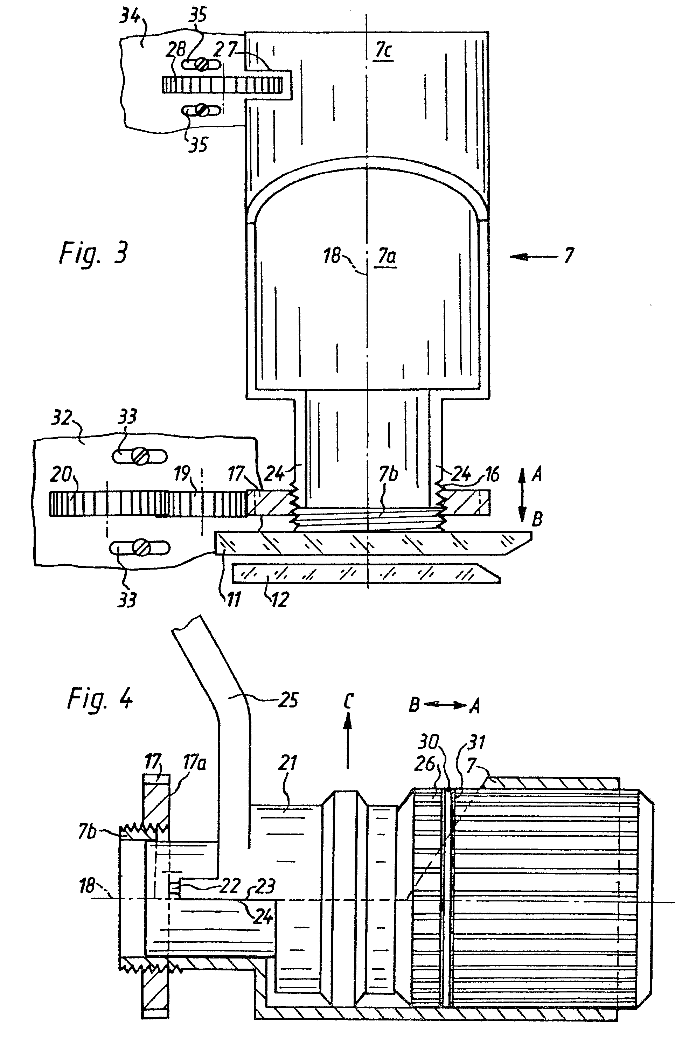

Wie aus Fig. 2 ersichtlich, umfaßt die Objektiveinrichtung einen zylinderförmigen Objektivträger 7, an dessen Mantelfläche zwei gegenüberliegende Bolzen 8 ausgebildet sind, die ihrerseits in Ausnehmungen 9b der Schenkel 9a einer U-förmigen Blattfeder 9 gelagert sind. Diese Blattfeder 9 ist über Schrauben 10 am Gerätegehäuse befestigt und drückt den Objektivhalter 7 in Richtung transparente Glasplatte 11, so daß der Objektivhalter federnd an der Glasplatte anliegt, wie beispielsweise aus Fig. 3 ersichtlich ist.

Die gegenüberliegend angeordneten Glasplatten 11 und 12 lassen zwischen sich einen Führungsspalt frei, in dem der Mikrofilmstreifen 13 in einer exakt definierten Abbildungsebene geführt ist. Mit den Bezugsziffern 14, 15 (Fig. 2) sind zu beiden Seiten der transparenten Glasplatten gelagerte Führungsrollen für den Film 13 bezeichnet.

Wie beispielsweise aus den Fig. 3 und 4 deutlich erkennbar ist, weist der Mantel des Objektivträgers 7 eine Öffnung 7a auf, an die sich in Richtung zur Glasplatte 11 ein geschlossener Bereich 7b und, gegenüberliegend, ein geschlossener Bereich 7c anschließt. Das der Glasplatte 1 zugewandte Ende des Objektivträgers ist mit einem Gewinde 16 versehen, auf das ein Stellring 17 aufgeschraubt ist, der durch Verdrehen in Pfeilrichtung A-B in Richtung der optischen Achse 18 verstellt werden kann. Der Stellring 17 ist als Zahnrad ausgebildet, das mit einem weiteren Zahnrad 19 kämmt, welches seinerseits über das dem Benutzer an der Frontseite 3 des Geräte-Unterteils zugängliche Fokussier-Handrad 20 (s. auch Fig. 1) betätigt werden kann.

Die Räder 19 und 20 sind an einem am Gerät befestigten Blech 32 gelagert. Die Langlöcher 3 im Blech 32 gestatten eine Justierung der Räder 19 und 20 zum Objektivträger, so daß diese stets auf günstigste Drehmomente und Zahneingriff eingestellt werden können.

Fig. 4 zeigt den Objektivträger mit eingesetztem Objektiv und eingesetztem Drehprisma. Das den transparenten Glasplatten zugewandte Ende des Objektivtubus 21 ist im geschlossenen Bereich 7b des Objektivträgers 7 geführt. Das gegenüberliegende Ende des Objektivtubus liegt auf dem der Öffnung 7a gegenüberliegenden unteren Bereich der Mantelfläche des Objektivhalters 7 auf. Zu beiden Seiten des Objektivtubus sind Auflagebolzen 22 ausgebildet, mit denen sich der Objektivtubus 21 an der Stirnfläche 17a des Stellrings 17 abstützt. Der Objektivtubus wird durch sein Eigengewicht an diesen Stellring angedrückt. Durch Verdrehen des Stellrings 17 wird somit das Objektiv parallel zur optischen Achse 18 zwecks Fokussierung verschoben.

Zu beiden Seiten des Objektivtubus 21 sind im Bereich der Auflagebolzen 22 parallel zur optischen Achse 18 verlaufende Stützflächen 23 ausgebildet, die bei der in Fig. 4 dargestellten Funktionsstellung des Objektivtubus 21 auf Stützflächen 24 des Objektivhalters 7 aufliegen oder zumindest einen sehr geringen Abstand zu diesen Stützflächen 24 aufweisen. Hierdurch wird verhindert, daß der in Betriebsposition befindliche Objektivtubus 21 verdreht werden kann, so daß stes eine definierte Winkellage des Objektivs zum abzubildenden Mikrobild gewährleistet ist.

Am Objektivtubus 21 ist ein Griff 25 ausgebildet, der, wie aus Fig. 1 ersichtlich, bei Funktionsstellung des Objektivtubus aus der Frontseite 3 des Gerätes herausragt und somit dem Benutzer jederzeit zugänglich ist. Will der Benutzer das Objektiv zwecks Reinigung oder Austausch aus dem Gerät enfernen, so greift er den Griff 25 und schiebt das Objektiv in Pfeilrichtung A, bis das Objektiv unter dem Ring 7b bzw. dem Stellring 17 freikommt und in Pfeilrichtung C durch die Öffnung 7a des Objektivträgers 7 hindurch aus dem Gerät entnommen werden kann. Zum Einsetzen des Objektivs wird in umgekehrter Reihenfolge verfahren. Der Objektivwechsel stellt somit einen einzigen Handgriff dar, der jederzeit mit einer einzigen Hand auf einfachste Weise durchgeführt werden kann, ohne daß am Gerät irgendwelche Manipulationen vorgenommen werden müßten.

Im rückwärtigen, geschlossenen Bereich 7c des Objektivhalters 7 ist ein Drehprisma 26 gelagert, welches sich als zylindrischer Körper darbietet, der in Richtung der optischen Achse 18 frei verschieblich ist und unter seinem Eigengewicht auf der Stirnfläche des Objektivtubus 21 aufliegt. Die Mantelfläche des Drehprismas 26 weist eine Zahnung auf, die mit einem durch eine Öffnung 27 des Objektivträgers hindurchgreifenden Zahnrad 28 zusammenwirkt (s. Fig. 3). Dieses Zahnrad 28 kämmt mit einem weiteren, dem Benutzer zugänglichen Handrad 29 (s. Fig. 1), um so das Drehprisma in die gewünschte Winkellage rotieren zu können.

Der eigentliche Prismenkörper ist innerhalb des zylindrischen Körpers 26 aus optischen Gründen dezentral angeordnet. Um eine gleichmäßige Bilddrehung zu ermöglichen, ist im Körper 26 ein nicht näher dargestellter Gewichtsausgleich angebracht.

Die Zahnung des Drehprismas erstreckt sich über dessen gesamte Baulänge, so daß das Zahnrad 28, unabhängig von der ggf. stark unterschiedlichen Baulänge des jeweils verwendeten Objektivtubus 21, mit der Zahnung ständig in Eingriff bleibt. Auch wenn der Objektivtubus aus dem Objektivträger entfernt wird und daraufhin das Drehprisma in Pfeilrichtung B bis auf Anschlag durchrutscht, bleiben Drehprisma und Zahnrad 28 in Eingriff.

Um ein Herausrutschen des Drehprismas aus dem Objektivträger in Pfeilrichtung A zu verhindern, ist die Zahnung des Drehprismas in ihrem objektivseitigen Ende mit einer umlaufenden Nut 31 versehen, in die ein Federring (30) eingespannt ist. Das Drehprisma kann somit nur so weit in Pfeilrichtung A verschoben werden, bis der Federring 30 am Zahnrad 28 anschlägt. Zum Entfernen des Drehprismas aus dem Objektivträger muß dieser leicht zur Seite gedrückt werden, was aufgrund seiner schwimmenden Lagerung ohne weiteres möglich ist. Auch die Räder 28 und 29 sind an einem am Gerät befestigten Blech 34 gelagert, wobei wiederum Langlöcher 35 im Blech 34 eine Justierung der Räder zum Objektivtubus zu dem im Zusammenhang mit Blech 32 geschilderten Zweck gestatten.

**Patentansprüche**

1. Wechselobjektiv-Einrichtung in einem Mikrofilm-Lesegerät mit einem Objektivtubus, der in einem im wesentlichen zylinderförmigen Objektivträger in Richtung der optischen Achse zwecks Fokussierung des Objektives verschieblich gelagert ist, dadurch gekennzeichnet, daß der Objektivträger (7) an seiner Mantelfläche eine Öffnung (7a) zum Einführen des Objektivtubus (21) in das Innere des Objektivträgers in einer Richtung im wesentlichen senkrecht zur optischen Achse (18) aufweist.

2. Wechselobjektiv-Einrichtung nach Anspruch 1, dadurch gekennzeichnet, daß der Objektivträger (7) einen dem Mikrofilm (13) zugewandten geschlossenen oder zumindest um mehr als 180° geschlossenen Bereich (7b) aufweist, in dem der in Funktionsposition befindliche Objektivtubus (21) geführt ist, und daß sich an diesen Bereich der geöffnete Bereich (7a) anschließt, der sich über mindestens 180° des Umfangs des zylinderförmigen Objektivträgers erstreckt.

3. Wechselobjektiv-Einrichtung nach Anspruch 2, dadurch gekennzeichnet, daß sich an den geöffneten Bereich (7a) des Objektivträgers (7) an der dem Mikrofilm (13) abgewandten Seite ein weiterer geschlossener oder zumindest um mehr als 180° geschlossener Bereich (7c) anschließt, in dem ein Drehprisma (26) drehbar gelagert ist.

4. Wechselobjektiv-Einrichtung nach Anspruch 3, dadurch gekennzeichnet, daß das Drehprisma (26) im Objektivträger (7) in Richtung der optischen Achse (18) verschieblich gelagert ist und unter der Wirkung einer in Richtung Mikrofilm (13) wirkenden Kraft steht.

5. Wechselobjektiv-Einrichtung nach einem der vorhergehenden Ansprüche, dadurch gekennzeichnet, daß der Objektivtubus (21) unter der Wirkung einer in Richtung Mikrofilm (13) wirkenden Kraft steht und an einen an dem dem Mikrofilm zugewandten Ende des Objektivtubus (7) aufgeschraubten Stellring (17) anschlägt, so daß durch Verdrehen des Stellrings der Objektivträger in Richtung der optischen Achse (18) verschiebbar ist.

6. Wechselobjektiv-Einrichtung nach einem der vorhergehenden Ansprüche, dadurch gekennzeichnet, daß der Objektivtubus (21) im Objektivträger (7) verdrehsicher gelagert ist.

7. Wechselobjektiv-Einrichtung nach Anspruch 6, dadurch gekennzeichnet, daß zwei Seiten (24) der Öffnung (7a) des Objektivträgers (7) parallel zur optischen Achse (18) ausgebildet sind und daß am Objektivtubus (21) achsparallele Stützflächen (23) ausgebildet sind, die mit den Seiten (24) der Öffnung zusammenwirken und hierdurch ein Verdrehen des Objektivtubus im Objektivträger verhindern.

8. Wechselobjektiv-Einrichtung nach einem der vorhergehenden Ansprüche, dadurch gekennzeichnet, daß am Objektivtubus (21) eine Handhabe (25) zum erleichterten Objektivwechsel ausgebildet ist.

9. Wechselobjektiv-Einrichtung nach Anspruch 8, dadurch gekennzeichnet, daß die Handhabe (25) als ein sich im wesentlichen radial vom Objektivtubus (21) erstreckender Griff ausgebildet ist, der in Betriebsposition des Objektivtubus durch die Öffnung (7a) im Objektivträger (7) aus diesem herausragt.

10. Wechselobjektiv-Einrichtung nach Anspruch 5, dadurch gekennzeichnet, daß mindestens ein mit dem Stellring (17) kämmendes Zahnrad (19, 20) vorgesehen ist, dessen Position relativ zum Stellring variierbar ist.

11. Wechselobjektiv-Einrichtung nach Anspruch 4, dadurch gekennzeichnet, daß die Mantelfläche des Drehprismas (26) eine achsparallele Zahnung aufweist, die im wesentlichen über die gesamte Baulänge des Prismenkörpers verläuft.

12. Wechselobjektiv-Einrichtung nach Anspruch 11, dadurch gekennzeichnet, daß mindestens ein mit dem Drehprisma (26) kämmendes Zahnrad (28) vorgesehen ist, dessen Position relativ zum Drehprisma bzw. zum Objektivträger variierbar ist.

13. Wechselobjektiv-Einrichtung nach Anspruch 11 und 12, dadurch gekennzeichnet, daß ein ggf. in einer Nut verlaufender, über die Zahnung des Drehprismas (26) gespannter Federring (30) vorgesehen ist, der durch Anschlag am Zahnrad (28) ein Herausrutschen des Drehprismas aus der rückwärtigen Öffnung des Objektivträgers (7) verhindert.

**Claims**

1. Interchangeable objective device in a microfilm reader with an objective barrel, which is mounted in an essentially cylindrical objective carrier so as to be displaceable in the direction of the optical axis in order to focus the objective, characterised in that the objective carrier (7) comprises at its surface area an opening (7a) for inserting the objective barrel (21) in the objective carrier in one direction, essentially at a right angle to the optical axis (18).

2. Interchangeable objective device according to claim 1, characterised in that the objective carrier (7) comprises a region (7b) which faces the microfilm (13) and is closed, or at least closed by more than 180°, in which region the objective barrel (21), which is in an operational position, is guided, and that the open region (7a) adjoins this region and extends over at least 180° of the circumference of the cylindrical objective carrier.

3. Interchangeable objective device according to claim 2, characterised in that a further region (7c), which is closed or at least closed by more than 180° and in which a rotating prism (26) is rotatably mounted, adjoins the open region (a) of the objective carrier (7) at the side facing away from the microfilm (13).

4. Interchangeable objective device according to claim 3, characterised in that the rotating prism (26) is mounted in the objective carrier (7) so as to be displaceable in the direction of the optical axis (18) and is subject to the action of a force which acts in the direction of the microfilm (13).

5. Interchangeable objective device according to one of the preceding claims, characterised in that the objective barrel (21) is subject to the action of a spring, which acts in the direction of the microfilm, and strikes against an adjusting ring (17), which is screwed to the end of the objective barrel (7) facing the microfilm, so that the objective carrier can be moved in the direction of the optical axis (18) by turning the adjusting ring.

6. Interchangeable objective device according to one of the preceding claims, characterised in that the objective barrel (21) is mounted in a nonrotatable manner in the objective carrier (7).

7. Interchangeable objective device according to claim 6, characterised in that two sides (24) of the opening (7a) of the objective carrier (7) are formed so as to extend parallel to the optical axis (18) and that axially parallel support surfaces (23) are formed at the objective barrel (21) and cooperate with the sides (24) of the opening, thus preventing the objective barrel from turning in the objective carrier.

8. Interchangeable objective device according to one of the preceding claims, characterised in that a handle (25) is formed on the objective barrel (21) to facilitate the objective changing procedure.

9. Interchangeable objective device according to claim 8, characterised in that the handle (25) is formed as a grip which extends essentially radially from the objective barrel (21) and projects through the opening (7a) in the objective carrier (7) out of the latter when the objective barrel is in the operating position.

10. Interchangeable objective device according to claim 5, characterised in that at least one toothed wheel (19, 20), which meshes with the adjusting ring (17), is provided, the position of which toothed wheel can be varied relative to the adjusting ring.

11. Interchangeable objective device according to claim 4, characterised in that the surface area of the rotating prism (26) comprises axially parallel teeth, which extend essentially over the entire overall length of the prism body.

12. Interchangeable objective device according to claim 11, characterised in that at least one toothed wheel (28), which meshes with the rotating prism (26), is provided, the position of which toothed wheel (28) can be varied relative to the rotating prism or the objective carrier.

13. Interchangeable objective device according to claims 11 and 12, characterised in that a spring ring (30), which may extend in a groove and which is tensioned over the teeth of the rotating prism (26), ist provided and, by striking against the toothed wheel (28), prevents the rotating prism from slipping out of the rear opening of the objective carrier (7).

**Revendications**

1. Dispositif de changement d'objectif d'un appareil de lecture de microfilms comprenant une monture d'objectif, qui est montée dans un porte-objectif de forme sensiblement cylindrique avec possibilité de coulisser suivant la direction de l'axe optique en vue d'une mise au point de l'objectif, caractérisé en ce que le porte-objectif (7) présente sur sa surface latérale une ouverture (7a) pour l'introduction de la monture d'objectif (21) à l'intérieur du porte-objectif suivant une direction sensiblement perpendiculaire à l'axe optique (18).

2. Dispositif de changement d'objectif suivant la revendication 1, caractérisé en ce que le porte-objectif (7) présente une région fermée (7b) ou du moins fermée sur plus de 180° du côté du microfilm (13), dans laquelle la monture d'objectif (21) se trouvant en position de fonctionnement est guidée et en ce qu'à cette région fait suite la région ouverte (7a) qui s'étend sur au moins plus de 180° du pourtour du porte-objectif cylindrique.

3. Dispositif de changement d'objectif suivant la revendication 2, caractérisé en ce que, à la région ouverte (7a) du porte-objectif (7) fait suite, du côté éloigné du microfilm (13), une autre région fermée (7c) ou, du moins, fermée sur plus de 180°, dans laquelle est monte à rotation un prisme tournant (26).

4. Dispositif de changement d'objectif suivant la revendication 3, caractérisé en ce que le prisme tournant (26) est monté coulissant suivant la direction de l'axe optique (8), dans le porte-objectif (7) et est soumis à l'action d'une force s'agissant dans la direction du microfilm (13).

5. Dispositif de changement d'objectif suivant l'une des revendications précédentes, caractérisé en ce que la monture d'objectif (21) est soumise à l'action d'une force s'agissant dans la direction du microfilm (13) et bute sur une bague de réglage (17) vissée, à l'extremité du porte-objectif (7) qui est du côté du microfilm, de sorte que par rotation de la bague de réglage, le porte-objectif puisse glisser suivant la direction de l'axe optique (18).

6. Dispositif de changement d'objectif suivant l'une des revendications précédentes, caractérisé en ce que le monture d'objectif (21) est montée sans possibilité de rotation dans le porte-objectif (7).

7. Dispositif de changement d'objectif suivant la revendication 6, caractérisé en ce que deux côtés (24) de l'ouverture (7a) du porte-objectif (7) sont parallèles à l'axe optique (18), et en ce que, sur la monture d'objectif (21), sont formées des surfaces d'appui (23) parallèles à l'axe qui coopèrent avec les côtés (24) de l'ouverture et empêchent ainsi une rotation de la monture d'objectif dans le porte-objectif.

8. Dispositif de changement d'objectif suivant l'une des revendications précédentes, caractérisé en ce que, sur la monture d'objectif (21), est formé un organe de préhension (25) pour faciliter le changement d'objectif.

9. Dispositif de changement d'objectif suivant la revendication 8, caractérisé en ce que l'organe de préhension (25) est agencé en une poignée qui s'étend sensiblement radialement depuis la monture d'objectif (21) et qui, en position de fonctionnement de la monture d'objectif, fait saillie à l'extérieur du porte-objectif (7) par l'ouverture (7a) de celui-ci.

10. Dispositif de changement d'objectif suivant la revendication 5, caractérisé en ce qu'il est prévu au moins une roue dentée (19, 20) qui engrène avec la bague de reglage (17) et dont la position relative, par rapport à la bague de réglage, peut être modifiée.

11. Dispositif de changement d'objectif suivant la revendication 4, caractérisé en ce que la surface latérale du prisme tournant (26) présente une denture parallèle à l'axe qui s'étend sensiblement sur toute la longueur du corps du prisme.

12. Dispositif de changement d'objectif suivant la revendication 11, caractérisé en ce qu'il est prévu au moins une roue dentée (28) qui engrène avec le prisme tournant (26) et dont la position, par rapport au prisme tournant ou par rapport au porte-objectif, peut être modifiée.

13. Dispositif de changement d'objectif suivant la revendication 11 et 12, caractérisé en ce qu'il est prévu une rondelle-ressort (30) qui s'étend éventuellement dans une gorge, qui est serrée sur la denture du prisme tournant (26) et qui, par butée sur la roue dentée (28), empêche un glissement du prisme tournant vers l'extérieur, par l'ouverture postérieure du porte-objectif (7).

Fig. 1

Fig. 2

Fig. 3

Fig. 4